# EUROPÄISCHE PATENTSCHRIFT

(11) **EP 1 756 537 B1**
(45) Veröffentlichungstag und Bekanntmachung des Hinweises auf die Patenterteilung: **05.12.2007**
(21) Anmeldenummer: 05754316.7
(22) Anmeldetag: 22.06.2005
(51) Int. Cl.: G01K 7/16

(54) **TEMPERATURFÜHLER UND VERFAHREN ZU DESSEN HERSTELLUNG**
TEMPERATURE SENSOR AND METHOD FOR THE PRODUCTION THEREOF
CAPTEUR DE TEMPERATURE ET SON PROCEDE DE PRODUCTION

(30) Priorität: 15.07.2004 DE 102004034185
(43) Veröffentlichungstag der Anmeldung: 28.02.2007
(73) Patentinhaber: Bernitz, Georg, 90441 Nürnberg (DE); Zitzmann, Heinrich, 91207 Lauf an der Pegnitz (DE)
(72) Erfinder: Bernitz, Georg, 90441 Nürnberg (DE); Zitzmann, Heinrich, 91207 Lauf an der Pegnitz (DE)
(74) Vertreter: Schoppe, Fritz
(86) Internationale Anmeldenummer: PCT/EP2005/006744
(87) Internationale Veröffentlichungsnummer: WO 2006/007930

(56) Entgegenhaltungen:
- DE-A1- 2 538 966
- DE-A1- 3 430 075
- DE-A1- 10 232 380
- DE-C1- 10 020 932

## Beschreibung

Die vorliegende Erfindung bezieht sich auf einen Temperaturfühler und auf ein Verfahren zu dessen Herstellung, und hier insbesondere auf einen Temperaturfühler, vorzugsweise einem Platintemperaturfühler, mit platzsparenden Kontaktanschlüssen und ein Verfahren zur Herstellung eines solchen Temperaturfühlers.

Platintemperaturfühler in Dünnschichttechnik werden seit Jahren in unterschiedlichen Ausführungsformen hergestellt.

Die DE 4445243 C2 beschreibt einen Temperaturfühler mit einem Keramiksubstrat, einem Widerstandsfühler, der im Keramiksubstrat eingebettet ist und der einen positiven Widerstandstemperaturkoeffizienten aufweist, zwei ersten Leitungen, die am Widerstandsfühler angeschlossen sind und der Stromzuführung dienen, zwei zweiten Leitungen, die mit dem Widerstandsfühler verbunden sind, wobei der Spannungsabfall am Widerstandsfühler mittels der zwei zweiten Leitungen erfasst werden können, und einen Spannungsteiler-Widerstand, der zwischen die zwei zweiten Leitungen und parallel zum Widerstandsfühler geschaltet ist, wobei die Ausgangssignalspannung des Temperaturfühlers als Teilspannung des Spannungsteiler-Widerstandes vorliegt, und wobei ferner zwei Anschlussflächen auf der Oberfläche des Keramiksubstrats angeordnet und mit einer der zwei zweiten Leitungen bzw. dem Spannungsteiler-Widerstand verbunden ist.

Die DE 10232380 A1 beschreibt einen Sensor mit Drahtverbindung und ein Verfahren zur Herstellung eines Sensors mit Drahtverbindung, wobei der Sensor eine erste Isolationsschicht, eine zweite Isolationsschicht mit einer Öffnung, eine Vielzahl von Metallleiterbahnen und eine Vielzahl von Elektroden aufweist, wobei jede Metallleiterbahn einen Kontaktbereich umfasst und zwischen der ersten und der zweiten Isolationsschicht angeordnet ist, und wobei ferner jede Elektrode einen Verbindungsbereich umfasst, der getrennt von dem Kontaktbereich angeordnet ist und wobei ferner die Elektroden durch die Öffnungen in elektrischer Verbindung mit den Kontaktbereichen stehen.

Die DE 3733192 C1 beschreibt einen PTC-Temperaturfühler sowie ein Verfahren zur Herstellung eines PTC-Temperaturfühlerelements für den PTC-Temperaturfühler, wobei der PTC-Temperaturfühler zwei Keramikfolien aufweist und derart ausgestaltet ist, dass die PTC-Widerstandsbahn hermetisch gegenüber dem Messgas und der Umgebungsluft abgekapselt ist und wobei ferner die PTC-Widerstandsbahn durch zwei gestanzte Durchkontaktierungslöcher mit den Kontaktflächen auf der anderen Seite der Folie verbunden ist.

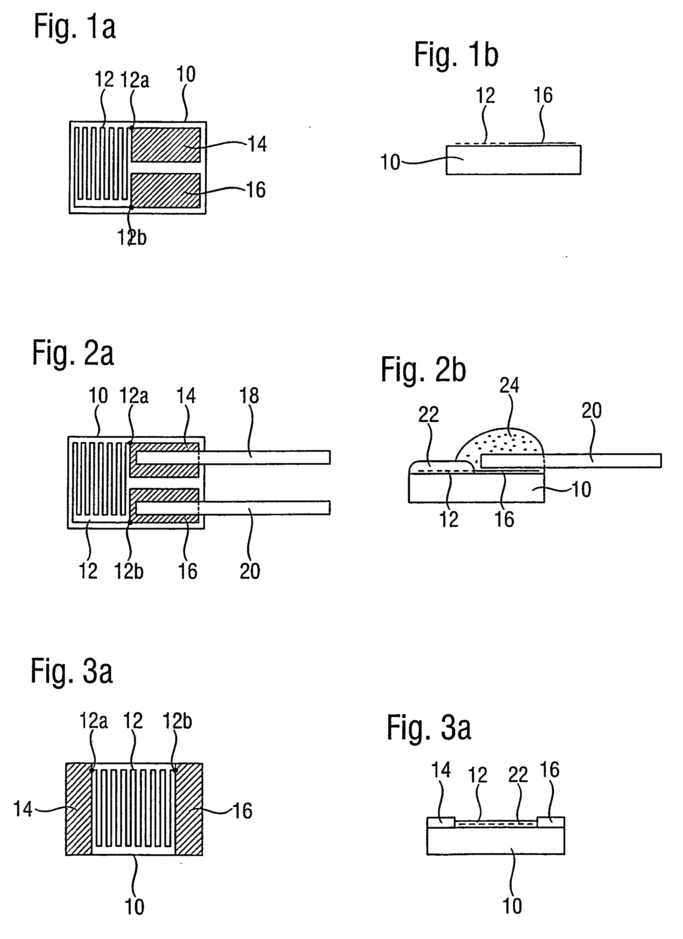

Anhand der Fig. 1 und 2 wird nachfolgend ein herkömmliches Verfahren zur Herstellung eines Platinsensors gemäß einem Ansatz, wie er im Stand der Technik bekannt ist, näher erläutert. In Fig. 1 und 2 zeigen die Figurenteile A jeweils Draufsichten des Temperatursensors und die Figurenteile B zeigen jeweils Seitenansichten. Solche Sensoren sind in DE 10020932 C1 bekannt.

Bei dem herkömmlichen Ansatz, wie in Fig. 1 gezeigt ist, wird auf einem Substrat 10 eine Sensorstruktur 12, vorzugsweise eine mäanderförmige Platinwiderstandsbahn, aufgebracht. Die Widerstandsbahn 12 hat ein erstes Ende 12a und ein zweites Ende 12b. Ferner sind auf dem Substrat 10 eine erste Kontaktfläche 14 und eine zweite Kontaktfläche 16 angeordnet, wobei die erste Kontaktfläche 14 mit dem ersten Ende 12a der Widerstandsbahn 12 verbunden ist und wobei die zweite Kontaktfläche 16 mit dem zweiten Ende 12b der Widerstandsbahn 12 verbunden ist.

Zur Fertigstellung des Temperaturfühlers wird, wie in Fig. 2 gezeigt ist, ein erster Anschlussdraht 18 an der ersten Kontaktfläche 14 und ein zweiter Anschlussdraht 20 an der zweiten Kontaktfläche 16 befestigt. Ferner wird vorzugsweise eine Schutzschicht 22 über der Widerstandsbahn 12 (siehe Fig. 2B) aufgebracht. Die Anschlussdrähte 18, 20 werden weiterhin vorzugsweise mittels einer Glasur 24, die auch teilweise die Abdeckung 22 überdeckt, zusätzlich fixiert.

Fig. 3 zeigt ebenfalls einen herkömmlichen Temperaturfühler, bei dem das Temperaturfühlerelement vom SMD-Typ ist. Anders als bei dem anhand der Fig. 1 und 2 beschriebenen Ausführungsbeispiel ist hier die Widerstandsbahn 12 derart auf dem Substrat 10 angeordnet, dass die jeweiligen Enden 12a und 12b der Widerstandsbahn 12 benachbart zu entgegengesetzten Enden des Substrats 10 angeordnet sind, an denen auch die Kontaktflächen 14 und 16 angeordnet sind. Ähnlich wie in Fig. 1 und 2 kann auch hier vorgesehen sein, die Widerstandsbahn 12 durch eine Schutzschicht 22 abzudecken (siehe Fig. 3B).

Die anhand der Fig. 1 bis 3 beschriebenen Temperaturfühler werden seit Jahren, wie erwähnt, in unterschiedlichen Ausführungsformen hergestellt und für präzise Temperaturmessaufgaben eingesetzt. Der typische Aufbau dieser Sensorelemente, wie er anhand der Fig. 1 bis 3 beschrieben ist, umfasst ein Al₂O₃-Keramiksubstrat 10, auf dem ein Platinfilm 12 von ca. 1 µm Dicke aufgebracht ist. Der Platinfilm ist ferner so strukturiert, dass die Widerstandsbahn z. B. einen Widerstand in der Größenordnung von 100 Ohm aufweist. Diese Platinwiderstandsbahn 12 wird üblicherweise durch die Schutzschicht 22 (z. B. eine Glasurschicht) geschützt. An die beiden Kontaktflächen 14, 16 werden in der Regel, außer bei SMD-Typen, die Anschlussdrähte 18, 20 angeschweißt, welche zusätzlich mit dem Glasurtropf 24 versehen werden, um eine mechanische Belastung der Anschlussdrähte 18, 20 bei der Weiterverarbeitung zuzulassen.

Seit Jahren ist im Stand der Technik eine Tendenz festzustellen, dass die anhand der Fig. 1 und 2 beispielhaft beschriebenen Dünnfilmsensorelemente immer kleiner werden, z. B. eine Breite von 1 mm, eine Länge von 1,5 mm und eine Höhe von 0,8 mm aufweisen oder sogar noch kleiner sind. Dies geht einher mit einer gleichzeitigen Erhöhung der Nennwiderstandswerte, z. B. auf 1.000 Ohm oder noch höher.

In den bisher bekannten Ausführungsformen ist hierbei sowohl die Widerstandsstruktur als auch die Kontaktzone für das Anbringen von Anschlussdrähten bzw. bei SMD-Bauelementen oder SMD-ähnlichen Ausführungsformen die Kontaktzone bzw. die Kontaktpads in der gleichen Ebene angeordnet, nämlich auf der Substratoberfläche, wie dies aus Fig. 1 bis 3 ersichtlich ist. Mit der zunehmenden Miniaturisierung und der gleichzeitig steigenden Anforderungen, einen hohen Nennwiderstandswert zu schaffen, müssen immer feinere Strukturen (Widerstandsbahnen) erzeugt werden, wobei für die beiden Kontaktflächen stets ein gewisser Flächenanteil reserviert sein muss. Diese Kontaktflächen 14, 16 können bei vergleichsweise kurzen Elementen deutlich mehr als 50 % der Gesamtfläche der Oberfläche des Substrats 10 beanspruchen, da beispielsweise die Drahtauflage auf dem Chip aus Gründen der mechanischen Festigkeit nicht beliebig kurz werden kann. Dieser Flächenanteil fehlt für die Widerstandsstruktur und muss deshalb durch sehr feine Bahnen, d. h. geringe Bahnbreiten, kompensiert werden, da die Dicke des verwendeten Platinfilms bzw. des verwendeten Metallfilms nicht beliebig dünn hergestellt werden kann.

Bei sehr feinen Bahnbreiten, beispielsweise von weniger als 5 µm, wird die Strukturierung jedoch immer schwieriger, da sich hier immer mehr auch die Planheit der Substrate oder andere Störeffekte (z. B. feinster Straub trotz Reinraum, geringste Schwankungen im Photorestistprozess) mehr und mehr negativ auswirken und zu einer geringeren Ausbeute führen.

Ausgehend von diesem Stand der Technik liegt der vorliegenden Erfindung die Aufgabe zugrunde, einen verbesserten Temperaturfühler und ein Verfahren zu dessen Herstellung zu schaffen, bei denen die Anforderungen nach zunehmender Miniaturisierung und gleichzeitiger Erhöhung der Nennwiderstandswerte erfüllt werden können, bei gleichzeitiger Sicherstellung einer guten Anschlusskontaktierung und einer Vermeidung von zu feinen Bahnbreiten bei der Herstellung der Widerstandsstruktur.

Diese Aufgabe wird durch einen Temperaturfühler gemäß Anspruch 1 sowie durch ein Verfahren gemäß Anspruch 9 gelöst.

Die vorliegende Erfindung schafft einen Temperaturfühler mit:
einem Substrat;
einer Sensorstruktur, die auf einer ersten Oberfläche des Substrats angeordnet ist, wobei die Sensorstruktur ein erstes Ende und ein zweites Ende umfasst;
einer Isolationsschicht, die zumindest teilweise auf der Sensorstruktur angeordnet ist; und
einer ersten und einer zweiten Kontaktfläche, die auf der Isolationsschicht angeordnet sind und mit dem ersten Ende bzw. dem zweiten Ende der Sensorstruktur leitfähig verbunden sind;
wobei die Sensorstruktur (12) die erste Oberfläche des Substrats (10) im wesentlichen vollständig bedeckt.

Vorzugsweise umfaßt die Isolationsschicht eine erste und eine zweite mit leitfähigem Material gefüllte Öffnung, wobei das leitfähige Material sowohl die zwei Enden der Sensorstruktur als auch die entsprechenden Kontaktflächen kontaktiert.

Vorzugsweise ist auf der Oberfläche des Substrats eine dritte und eine vierte Kontaktfläche vorgesehen, die geringere Abmessungen aufweisen als die erste und die zweite Kontaktfläche, wobei die dritte und die vierte Kontaktfläche mit dem ersten bzw. zweiten Ende der Sensorstruktur verbunden sind. Die Dicke der Isolationsschicht liegt vorzugsweise im Bereich zwischen 0,01 mm (10 µm) und 0,2 mm. Wird die Isolationsschicht z.B. aufgedampft, so kann die Dicke dünner sein, z.B. im Bereich von 1 µm. Die Sensorstruktur umfasst vorzugsweise einen Metallfilm, z. B. in Mäanderform, mit einer Dicke z.B. zwischen 0,1 µm und 3 µm. Die Isolationsschicht ist vorzugsweise durch eine Glasur, eine Glaskeramik, eine Keramik oder eine Kombination derselben gebildet.

Gemäß einem weiteren Ausführungsbeispiel umfasst der Temperaturfühler zusätzlich erste und zweite Anschlussdrähte, die auf den entsprechenden ersten und zweiten Kontaktflächen befestigt sind.

Die vorliegende Erfindung schafft ferner ein Verfahren zum Herstellen eines Temperaturfühlers mit folgenden Schritten:
(a) Bereitstellen eines Substrats, auf dessen erster Oberfläche eine Sensorstruktur mit einem ersten und mit einem zweiten Ende angeordnet ist, wobei die Sensorstruktur die erste Oberfläche des Substrats im wesentlichen vollständig bedeckt;
(b) Bilden einer Isolationsschicht zumindest teilweise auf der Sensorstruktur; und
(c) Bilden einer ersten und einer zweiten Kontaktfläche auf der Isolationsschicht, derart, dass dieselben mit dem ersten Ende bzw. dem zweiten Ende der Sensorstruktur leitfähig verbunden ist.

Vorzugsweise umfasst der Schritt des Bildens der Isolationsschicht das Bilden derselben mit einem ersten und einem zweiten offenen Bereich, entsprechend der Position der zwei Enden der Sensorstruktur auf dem Substrat. Das Bilden der Kontaktflächen umfasst vorzugsweise das Aufbringen einer leitfähigen Paste bzw. eines leitfähigen Materials, wobei das Aufbringen des leitfähigen Materials auch ein Füllen der zwei offenen Bereiche in der Isolationsschicht umfasst.

Gemäß einem weiteren bevorzugten Ausführungsbeispiel umfasst das Verfahren zusätzlich den Schritt des Aufbringens von zwei Anschlussdrähten an den entsprechenden Kontaktflächen, wobei zusätzlich vorgesehen sein kann, eine Glasur auf die an den Kontaktflächen befestigten Abschnitte der Anschlussdrähte aufzubringen.

Die vorliegende Erfindung schafft somit einen Temperaturfühler und ein Verfahren zu dessen Herstellung, wobei der Platzbedarf in den Kontaktzonen in der Filmebene, also in der Ebene, in der die Sensorstruktur gebildet wird, minimiert wird, so dass gleichzeitig mehr Fläche für die Widerstandsstrukturen verfügbar ist bzw. die Sensorstruktur die erste Oberfläche des Substrats im wesentlichen vollständig bedeckt, bei gleicher Chipgröße.

Bevorzugte Ausführungsbeispiele der vorliegenden Erfindung werden nachfolgend anhand der beiliegenden Zeichnungen näher erläutert. Es zeigen:
- Fig. 1: einen herkömmlichen Temperatursensor in Dünnfilmtechnik nach einem ersten Herstellungsschritt, wobei Fig. 1A eine Draufsicht zeigt und Fig. 1B eine Seitenansicht zeigt;
- Fig. 2: eine Draufsicht auf den in Fig. 1 gezeigten Temperaturfühler nach einem weiteren Herstellungsschritt, wobei Fig. 2A eine Draufsicht und Fig. 2B eine Seitenansicht zeigt;
- Fig. 3: eine Darstellung eines Temperaturfühlers vom SMD-Typ, wobei Fig. 3A eine Draufsicht und Fig. 3B eine Seitenansicht zeigt;
- Fig. 4: eine Darstellung eines ersten Ausführungsbeispiels für den erfindungsgemäßen Temperatursensor nach einem ersten Herstellungsschritt, wobei Fig. 4A eine Draufsicht und Fig. 4B eine Seitenansicht zeigt;
- Fig. 5: eine Darstellung des Temperaturfühlers aus Fig. 4 nach einem weiteren Herstellungsschritt, wobei Fig. 5A eine Draufsicht und Fig. 5B eine Seitenansicht zeigt;
- Fig. 6: eine Darstellung des Temperaturfühlers aus Fig. 5 nach einem weiteren Herstellungsschritt, wobei Fig. 6A eine Draufsicht und Fig. 6B eine Seitenansicht zeigt; und
- Fig. 7: einen Temperaturfühler gemäß einem weiteren Ausführungsbeispiel der vorliegenden Erfindung vom SMD-Typ, wobei Fig. 7A eine Draufsicht und Fig. 7B eine Seitenansicht zeigt.

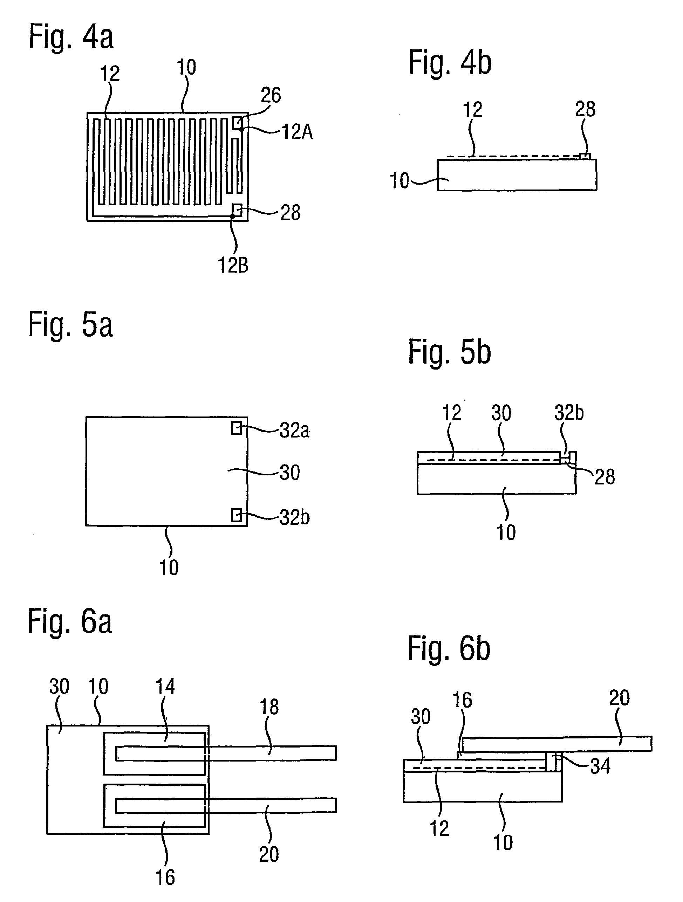

In der nachfolgenden Beschreibung der bevorzugten Ausführungsbeispiele werden für gleiche oder gleichwirkende Elemente gleiche Bezugszeichen verwendet, wobei die bereits anhand der Fig. 1 bis 3 beschriebenen Elemente, die sich auch in den Fig. 5 bis 7 wiederfinden, mit den gleichen Bezugszeichen versehen sind.

Anhand der Fig. 4 bis 6 wird nachfolgend ein erstes Ausführungsbeispiel des erfindungsgemäßen Verfahrens zum Herstellen eines Temperaturfühlers sowie ein erstes Ausführungsbeispiel des hergestellten Temperaturfühlers näher erläutert. Die Figurenteile A zeigen jeweils eine Draufsichtdarstellung der Temperaturfühler und die Figurenteile B zeigen jeweils eine Seitenansicht.

In Fig. 4 ist ein erstes Ausführungsbeispiel des Temperaturfühlers gemäß der vorliegenden Erfindung nach einem ersten Herstellungsschritt gezeigt. Der Temperaturfühler umfasst das Substrat 10, auf dessen erster Oberfläche ein Widerstandsfilm 12 gebildet ist, der ein erstes Ende 12a und ein zweites Ende 12b aufweist. Wie aus Fig. 4A zu erkennen ist, ist die Widerstandsstruktur 12 derart gebildet, dass diese im wesentlichen die gesamte obere Oberfläche des Substrats 10 bedeckt, und lediglich anschließend an die Enden 12a und 12b der Widerstandsstruktur sind kleine Kontaktflächen 26, 28 vorgesehen.

In einem nachfolgenden Verfahrensschritt wird bei dem beschriebenen, bevorzugten Ausführungsbeispiel eine Isolationsschicht 30 auf die Widerstandsbahn 12 derart aufgebracht, dass die gesamte erste Oberfläche des Substrats 10 sowie die Widerstandsstruktur 12 bedeckt ist. In der Isolationsschicht 30 sind zwei Öffnungen 32a, 32b an Positionen angeordnet, die den Positionen der kleinen Kontaktflächen 26, 28 in der Widerstandselementebene, also auf der ersten Oberfläche des Substrats 10, entsprechen.

In einem nachfolgenden Schritt wird, wie in Fig. 6 zu erkennen ist, auf der Isolationsschicht 30 die erste Kontaktfläche 14 und die zweite Kontaktfläche 16 angeordnet, wobei ebenfalls leitfähiges Material in die Öffnungen 32a, 32b eingebracht wird, um eine Kontaktierung der Kontaktflächen 14 bzw. 16 mit den kleinen Anschlussflächen 26 bzw. 28 in der Widerstandselementebene über eine leitfähige Verbindung 34 in den Öffnungen sicherzustellen. Zusätzlich kann vorgesehen sein, Anschlussdrähte 18, 20 an den Kontaktflächen 14, 16 zu befestigen, und ferner kann vorgesehen sein, zusätzlich eine Glasur zur Fixierung der Anschlussdrähte vorzusehen (nicht gezeigt).

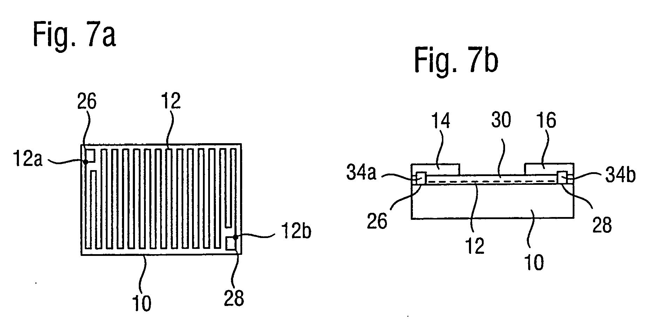

Fig. 7 zeigt die Anwendung des erfindungsgemäßen Ansatzes auf Temperaturfühler vom SMD-Typ. Auch hier werden über kleine Anschlussflächen 26, 28 die Enden der Widerstandsbahn 12 über die leitfähigen Verbindungen 34a, 34b in der Isolationsschicht 30 mit den auf der Isolationsschicht 30 gebildeten, großflächigen Kontaktflächen 14, 16 verbunden.

Erfindungsgemäß wird es ermöglicht, die gesamte Fläche des Substrats 10 für das Widerstandsmäander 12 zu verwenden. Lediglich zwei sehr kleine Kontaktflächen 26, 28 (deutlich kleiner als die Abmessung der im Stand der Technik verwendeten Kontaktflächen) sind bei den bevorzugten Ausführungsbeispielen für eine Fortführung der Kontakte in einer über dem Widerstandsmäander liegenden Ebene vorgesehen. Die kleinen Kontaktflächen 26, 28 haben beispielsweise Abmessungen von 0,1 mm bis 0,3 mm, und die großen Kontaktflächen 14, 16 haben beispielsweise Abmessungen von 1 mm bis 3 mm. Bei quadratischen Kontaktflächen ergibt sich somit ein Flächenverhältnis zwischen den großen Kontaktflächen 14, 16 und den kleinen Kontaktflächen 26, 28 von etwa 100. Dies bedeutet, das anders als im Stand der Technik nur noch 1/100 der Fläche auf der Substratoberfläche für die Kontaktflächen benötigt wird.

Das Widerstandsmäander 12 wird hierbei flächig mit einer beliebigen, geeigneten Dielektrikumsschicht 30 beschichtet, z. B. einer geeigneten hochschmelzenden Glasur im Siebdruckverfahren. Über die Öffnungen 32a, 32b bleiben die vergleichsweise sehr kleinen Kontaktflächen 26, 28 frei, werden also nicht durch die Isolationsschicht 30 bedeckt.

Diese Isolationsschicht bzw. Dielektrikumsschicht 30 ist so dimensioniert, dass dieselbe eine ausreichende Dicke und Dichtigkeit gegen die darüber aufzubringende Metallisierungsschicht für die Kontaktflächen 14, 16 aufweist, die, anders als im Stand der Technik, in der Ebene über der Dielektrikumsschicht 30 aufgebracht wird. Die Metallisierung 14, 16 kann z. B. durch Siebdruck oder ein anderes geeignetes Verfahren, z. B. elektrochemische Abscheidung, in Form beliebiger Kontaktflächen aufgebracht werden. Vor dem Aufbringen der Kontaktfläche 14 bzw. 16 wird ein leitfähiges Material 34, 34a, 34b in die Öffnungen 32a, 32b in der Isolationsschicht 30 eingebracht, beispielsweise durch Auffüllen der Öffnungen mit einer Metallpaste, um so eine leitende Verbindung zwischen den Kontaktflächen in der Ebene des Widerstandsmäanders und in der Ebene oberhalb der Isolationsschicht sicherzustellen.

Sowohl die Dielektrikumsschicht als auch die darüber liegende Metallisierung 14, 16 können mittels Dickschichtprozessen (Siebdruck plus Einbrennen der Pasten) oder auch durch andere Technologien (z. B. Bedampfen) aufgebracht werden, abhängig von dem für die jeweilige Anwendung geeigneten Prozess.

Als Material kann bei den Dielektrikumsschichten jedes geeignete Isolationsmaterial verwendet werden, z. B. hochschmelzende Glasuren, Glaskeramik, Keramik, z. B. aufgedampftes Al₂O₃, oder auch Kombinationen dieser Schichten, z. B. eine Al₂O₃-Schicht plus Glasur. Die Dicke der Isolationsschicht hängt von der Anwendung des Temperaturfühlers ab und liegt im Bereich von Mikrometern bis etwa 0,2 mm.

Die Metallisierung 14, 16 kann z. B. durch Gold, Platin, Silber, Nickel, Kupfer oder geeignete Legierungen, z. B. Ag/Pt, Ag/Pd, Au/Pt etc. oder Kombinationen, z. B. Ag/Pt plus Au etc., in Schichten von unter 1 µm bis zu mehreren 100 µm verwendet werden.

Nach Durchführung dieser Prozessschritte können weitere Herstellungsprozessschritte der Bauelemente, Verdrahtung, SMD-Ausführung, wie bei Elementen mit herkömmlichen Kontaktzonen durchgeführt werden.

Die Form und die Größe der Metallisierungsanschlussflächen 14, 16 in der über dem Dielektrikum 30 liegenden Ebene können beliebig gestaltet werden und sind nicht auf die oben beschriebenen Ausführungsbeispiele beschränkt.

Wie die obige Erläuterung zeigt, ist die vorliegende Erfindung vorteilhaft, da hier eine höhere Ausbeute erreicht werden kann, zusätzlich zu einer verbesserten mechanischen und elektrischen Kontaktierung aufgrund der verbesserten und vergrößerten Kontaktzonen.

## Patentansprüche

1. Temperaturfühler mit folgenden Merkmalen:
einem Substrat (10);
einer Sensorstruktur (12), die auf einer ersten Oberfläche des Substrats (10) angeordnet ist, wobei die Sensorstruktur (12) ein erstes Ende (12a) und ein zweites Ende (12b) umfasst;
einer Isolationsschicht (30), die zumindest teilweise auf der Sensorstruktur (12) angeordnet ist; und
einer ersten und einer zweiten Kontaktfläche (14, 16), die auf der Isolationsschicht (30) angeordnet sind und mit dem ersten Ende (12a) bzw. dem zweiten Ende (12b) der Sensorstruktur (12) leitfähig verbunden sind;
**dadurch gekennzeichnet, dass**
die Sensorstruktur (12) die erste Oberfläche des Substrats (10) im wesentlichen vollständig bedeckt.

2. Temperaturfühler nach Anspruch 1, bei dem die Isolationsschicht (30) eine erste und eine zweite mit leitfähigem Material (34; 34a, 34b) gefüllte Öffnung (32a, 32b) umfasst, wobei das leitfähige Material (34; 34a, 34b) mit dem ersten Ende (12a) und dem zweiten Ende (12b) der Sensorstruktur (12) und mit der ersten Kontaktfläche (14) und der zweiten Kontaktfläche (16) in Kontakt ist.

3. Temperaturfühler nach Anspruch 1 oder 2, mit
einer dritten und einer vierten Kontaktfläche (26, 28), die auf der ersten Oberfläche des Substrats (10) angeordnet sind und mit dem ersten bzw. zweiten Ende (12a, 12b) der Sensorstruktur (12) und mit der ersten bzw. der zweiten Kontaktfläche (14, 16) auf der Isolationsschicht (30) in Verbindung sind, wobei die dritte und die vierte Kontaktfläche (26, 28) eine Abmessung aufweisen, die kleiner ist als die Abmessung der ersten und der zweiten Kontaktfläche (14, 16).

4. Temperaturfühler nach einem der Ansprüche 1 bis 3, bei dem die Isolationsschicht (30) eine Dicke zwischen 1 µm und 0,2 mm aufweist.

5. Temperaturfühler nach einem der Ansprüche 1 bis 4, bei dem die Sensorstruktur (12) einen Metallfilm mit einer Dicke zwischen 0,1 µm und 3 µm umfasst.

6. Temperaturfühler nach einem der Ansprüche 1 bis 5, bei dem die Isolationsschicht eine Glasur, eine Glaskeramik, eine Keramik und Kombinationen derselben umfasst.

7. Temperaturfühler nach einem der Ansprüche 1 bis 6 mit
einem ersten und einem zweiten Anschlussdraht (18, 20), die auf der ersten bzw. zweiten Kontaktfläche (14, 16) befestigt sind.

8. Verfahren zum Herstellen eines Temperaturfühlers mit folgenden Schritten:
(a) Bereitstellen eines Substrats (10), auf dessen erster Oberfläche eine Sensorstruktur (12) mit einem ersten Ende (12a) und einem zweiten Ende (12b) angeordnet ist, wobei die Sensorstruktur (12) die erste Oberfläche des Substrats (10) im wesentlichen vollständig bedeckt;
(b) Bilden einer Isolationsschicht (30) zumindest teilweise auf der Sensorstruktur (12); und
(c) Bilden einer ersten und einer zweiten Kontaktfläche (14, 16) auf der Isolationsschicht (30), derart, dass dieselben mit dem ersten Ende (12a) bzw. dem zweiten Ende (12b) der Sensorstruktur (12) leitfähig verbunden sind.

9. Verfahren nach Anspruch 8, bei dem im Schritt (b) die Isolationsschicht (30) mit einem ersten und einem zweiten offenen Bereich (32a, 32b), entsprechend der Position des ersten bzw. zweiten Endes (12a, 12b) der Sensorstruktur (12), gebildet wird, und bei dem im Schritt (c) die erste und zweite Kontaktfläche (14, 16) durch Aufbringen eines leitfähigen Materials gebildet werden, wobei das Aufbringen des leitfähigen Materials ein Füllen des ersten und des zweiten offenen Bereichs (32a, 32b) der Isolationsschicht mit einem leitfähigen Material (34; 34a, 34b) umfasst.

10. Verfahren nach Anspruch 8 oder 9, bei dem die Isolationsschicht (30) eine Dicke zwischen 1 µm und 0,2 mm aufweist.

11. Verfahren nach einem der Ansprüche 8 bis 10, bei dem die Isolationsschicht (30) eine Glasur, eine Glaskeramik, eine Keramik und Kombinationen derselben umfasst.

12. Verfahren nach einem der Ansprüche 8 bis 11 mit folgendem Schritt nach dem Schritt (c):
(d) Befestigen eines ersten und eines zweiten Anschlussdrahts (18, 20) an der ersten bzw. zweiten Kontaktfläche (14, 16).

13. Verfahren gemäß Anspruch 12 mit folgendem Schritt nach dem Schritt (d):
(e) Aufbringen einer Glasur (24), die die an der ersten und zweiten Kontaktfläche (14, 16) befestigten Abschnitte der Anschlussdrähte (18, 20) zumindest teilweise bedeckt.

## Claims

1. Temperature sensor, comprising:
a substrate (10);
a sensor structure (12) arranged on a first surface of the substrate (10), wherein the sensor structure (12) includes a first end (12a) and a second end (12b);
an insulation layer (30) at least partially arranged on the sensor structure (12); and
a first and a second contact area (14, 16) arranged on the insulation layer (30) and conductively connected to the first end (12a) and the second end (12b) of the sensor structure (12), respectively;
**characterized in that**
the sensor structure (12) substantially completely covers the first surface of the substrate (10).

2. Temperature sensor of claim 1, wherein the insulation layer (30) includes a first and a second opening (32a, 32b) filled with conductive material (34; 34a, 34b), wherein the conductive material (34; 34a, 34b) is in contact with the first end (12a) and the second end (12b) of the sensor structure (12) and with the first contact area (14) and the second contact area (16).

3. Temperature sensor of claims 1 or 2, comprising:
a third and a fourth contact area (26, 28) arranged on the first surface of the substrate (10) and in connection with the first and the second end (12a, 12b) of the sensor structure (12), respectively, and with the first and the second contact area (14, 16) on the insulation layer (30), respectively, wherein the third and the fourth contact area (26, 28) have a size smaller than the size of the first and the second contact area (14, 16).

4. Temperature sensor of one of claims 1 to 3, wherein the insulation layer (30) has a thickness between 1 µm and 0.2 mm.

5. Temperature sensor of one of claims 1 to 4, wherein the sensor structure (12) includes a metal film having a thickness between 0.1 µm and 3 µm.

6. Temperature sensor of one of claims 1 to 5, wherein the insulation layer includes a glaze, a glass ceramic, a ceramic and combinations thereof.

7. Temperature sensor of one of claims 1 to 6, comprising:
a first and a second connecting wire (18, 20) affixed on the first and the second contact area (14, 16), respectively.

8. Method for producing a temperature sensor, comprising:
(a) providing a substrate (10) on the first surface of which there is arranged a sensor structure (12) having a first end (12a) and a second end (12b), wherein the sensor structure (12) substantially completely covers the first surface of the substrate (10);
(b) forming an insulation layer (30) at least partially on the sensor structure (12); and
(c) forming a first and a second contact area (14, 16) on the insulation layer (30) such that they are conductively connected to the first end (12a) and the second end (12b) of the sensor structure (12), respectively.

9. Method of claim 8, wherein, in step (b), the insulation layer (30) is formed with a first and a second open area (32a, 32b), corresponding to the position of the first and the second end (12a, 12b) of the sensor structure (12), respectively, and wherein, in step (c), the first and the second contact area (14, 16) are formed by applying a conductive material, wherein the application of the conductive material includes filling the first and the second open area (32a, 32b) of the insulation layer with a conductive material (34; 34a, 34b).

10. Method of claim 8 or 9, wherein the insulation layer (30) has a thickness between 1 µm and 0.2 mm.

11. Method of one of claims 8 to 10, wherein the insulation layer (30) includes a glaze, a glass ceramic, a ceramic and combinations thereof.

12. Method of one of claims 8 to 11, having the following step after step (c):
(d) affixing a first and a second connecting wire (18, 20) to the first and the second contact area (14, 16), respectively.

13. Method of claim 12, having the following step after step (d):
(e) applying a glaze (24) covering at least partially the portions of the connecting wires (18, 20) affixed to the first and second contact areas (14, 16).

## Revendications

1. Capteur de température, aux caractéristiques suivantes:
un substrat (10);
une structure de capteur (12) disposée sur une première surface du substrat (10), la structure de capteur (12) comportant une première extrémité (12a) et une deuxième extrémité (12b);
une couche d'isolation (30) qui est disposée au moins partiellement sur la structure de capteur (12); et
une première et une deuxième surface de contact (14, 16) qui sont disposées sur la couche d'isolation (30) et qui sont reliées de manière conductrice à la première extrémité (12a) ou la deuxième extrémité (12b) de la structure de capteur (12);
**caractérisé par le fait que**
la structure de capteur (12) recouvre sensiblement complètement la première surface du substrat (10).

2. Capteur de température selon la revendication 1, dans lequel la couche d'isolation (30) comporte une première et une deuxième ouverture (32a, 32b) remplie de matériau conducteur (34; 34a, 34b), le matériau conducteur (34; 34a, 34b) étant en contact avec la première extrémité (12a) et la deuxième extrémité (12b) de la structure de capteur (12) et avec la première surface de contact (14) et la deuxième surface de contact (16).

3. Capteur de température selon la revendication 1 ou 2, avec
une troisième et une quatrième surface de contact (26, 28) qui sont disposées sur la première surface du substrat (10) et qui communiquent avec la première ou la deuxième extrémité (12a, 12b) de la structure de capteur (12) et avec la première ou la deuxième surface de contact (14, 16) sur la couche d'isolation (30), la troisième et la quatrième surface de contact (26, 28) présentant une dimension inférieure à la dimension de la première et de la deuxième surface de contact (14, 16).

4. Capteur de température selon l'une des revendications 1 à 3, dans lequel la couche d'isolation (30) présente une épaisseur comprise entre 1 µm et 0,2 mm.

5. Capteur de température selon l'une des revendications 1 à 4, dans lequel la structure de capteur (12) comporte un film métallique d'une épaisseur comprise entre 1 µm et 0,2 µm.

6. Capteur de température selon l'une des revendications 1 à 5, dans lequel la couche d'isolation comprend un émail, une céramique vitreuse, une céramique et des combinaisons de ceux-ci.

7. Capteur de température selon l'une des revendications 1 à 6 avec
un premier et un deuxième fil de raccordement (18, 20) qui sont fixés à la première ou la deuxième surface de contact (14, 16).

8. Procédé de fabrication d'un capteur de température, aux étapes suivantes consistant à:
(a) préparer un substrat (10), sur la première surface duquel est disposée une structure de capteur (12) avec une première extrémité (12a) et une deuxième extrémité (12b), la structure de capteur (12) recouvrant sensiblement complètement la première surface du substrat (10);
(b) former une couche d'isolation (30) au moins partiellement sur la structure de capteur (12); et
(c) former une première et une deuxième surface de contact (14, 16) sur la couche d'isolation (30) de sorte que celles-ci soient reliées de manière conductrice à la première extrémité (12a) ou la deuxième extrémité (12b) de la structure de capteur (12).

9. Procédé selon la revendication 8, dans lequel, à l'étape (b), la couche d'isolation (30) est formée avec une première et une deuxième zone ouverte (32a, 32b) correspondant à la position de la première ou de la deuxième extrémité (12a, 12b) de la structure de capteur (12), et dans lequel, à l'étape (c), la première et la deuxième surface de contact (14, 16) sont formées par application d'un matériau conducteur, l'application du matériau conducteur comprenant un remplissage de la première et de la deuxième zone ouverte (32a, 32b) de la couche d'isolation par un matériau conducteur (34; 34a, 34b).

10. Procédé selon la revendication 8 ou 9, dans lequel la couche d'isolation (30) présente une épaisseur comprise entre 1 µm et 0,2 mm.

11. Procédé selon l'une des revendications 8 à 10, dans lequel la couche d'isolation (30) comprend un émail, une céramique vitreuse, une céramique et des combinaisons de ceux-ci.

12. Procédé selon l'une des revendications 8 à 11, à l'étape suivante après l'étape (c):
(d) fixer un premier et un deuxième fil de raccordement (18, 20) à la première ou à la deuxième surface de contact (14, 16).

13. Procédé selon la revendication 12, avec l'étape suivante après l'étape (d):
(e) appliquer un émail (24) qui recouvre au moins partiellement les segments des fils de raccordement (18, 20) fixés à la première et à la deuxième surface de contact (14, 16).
